**Europäisches Patentamt**

**European Patent Office**

**Office européen des brevets**

(11) Veröffentlichungsnummer: **0 092 171**
A1

## (12) EUROPÄISCHE PATENTANMELDUNG

(21) Anmeldenummer: **83103601.7**

(22) Anmeldetag: **14.04.83**

(51) Int. Cl.³: **G 05 D 1/03**

(30) Priorität: **20.04.82 DE 3214390**

(43) Veröffentlichungstag der Anmeldung: **26.10.83**
**Patentblatt 83/43**

(84) Benannte Vertragsstaaten: **AT BE CH FR GB IT LI NL SE**

(71) Anmelder: **Ernst Wagner KG, Postfach 132 St.
Peter-Strasse 5, D-7410 Reutlingen 1 (DE)**

(72) Erfinder: **Stiefel, Hermann, Donauschwabenstrasse 23,
D-7410 Reutlingen 2 (DE)**

(74) Vertreter: **Schmid, Berthold, Patentanwälte Dipl.-Ing. B.
Schmid Dr. Ing. G. Birn Falbenhennenstrasse 17,
D-7000 Stuttgart 1 (DE)**

(54) Vorrichtung zur Abtastung eines Leitdrahtes zur Führung von selbstfahrenden Fahrzeugen.

㉗ Um bei selbstfahrenden, einem Leitdraht entlang geführten Fahrzeugen vor Fahrtantritt auf einfache Weise die Wirksamkeit der Lenkung insbesondere im Stand überprüfen zu können, ist am Fahrzeug (1) ein Testsender (8) angeordnet, der die Impulse eines Leitdrahtes ausstrahlt. Die Impulse werden vom Abtastelement einer nachgeschalteten Prüfungsvorrichtung (6) zugeführt. Diese zeigt Fehler im Lenksystem an und blockiert gegebenenfalls den Antriebsmotor des Fahrzeuges.

Firma

Ernst Wagner KG

7410 Reutlingen

Vorrichtung zur Abtastung eines Leitdrahtes
zur Führung von selbstfahrenden Fahrzeugen.

Selbstfahrende Fahrzeuge, insbesondere solche, die mit größerer
Geschwindigkeit in engen Regalgängen geführt werden, müssen absolut sicher gelenkt werden, da bei Lenkfehlern erhebliche,
insbesondere in den Regalen lagernde Werte zerstört werden können. Aus diesem Grunde ist es erforderlich, unmittelbar nach
dem Startvorgang eine Überprüfung der Lenkeinrichtung vorzunehmen. Bisher bestand nur die Möglichkeit, zu diesem Zweck eine
in möglichst großem Umkreis freigehaltene Teststrecke zu befahren, auf welcher auch bei Lenkfehlern keine Schäden verursacht werden können. Einerseits benötigt eine solche Teststrecke verhältnismäßig viel unnötigen Raum, und andererseits wird oft aus Bequemlichkeit das regelmäßige Befahren der Teststrecke unterlassen.

Die Aufgabe der vorliegenden Erfindung ist es nunmehr, auf möglichst einfache Art eine zwangsläufige Überprüfung der Lenkeinrichtung vorzunehmen.

Bei einer Vorrichtung zur Abtastung eines Leitdrahtes zur Führung von selbstfahrenden Fahrzeugen mit mindestens einem Abtastelement wird dies erfindungsgemäß durch die Anordnung eines mittels eines Schalters betätigbaren, die Impulse eines Leitdrahtes ausstrahlenden Testsenders und einer dem Abtastelement nachgeschalteten Prüfvorrichtung für dieses erreicht. Das Einschalten des Testsenders kann im Stand des Fahrzeugs an jeder beliebigen Stelle erfolgen, wobei die Prüfvorrichtung eine Abweichung vom Normwert anzeigt. Vorzugsweise ist mit der Prüfvorrichtung eine Abschalt- und/oder Blockiervorrichtung für den Antriebsmotor des Fahrzeugs so verbunden, daß bei Fehlermessung die Abschalt- und/oder Blockiervorrichtung wirksam ist. Auf diese Weise kann die Benutzung eines Fahrzeugs mit fehlerhafter Lenkeinrichtung sicher verhindert werden.

Bei Fahrzeugen mit zwei seitlich der Fahrzeuglängsachse ordneten Abtastelementen ist der Sender vorzugsweise etwa in der Fahrzeuglängsachse vorgesehen, so daß sich die gleichen Verhältnisse wie beim Fahren über den Leitdraht ergeben. Um weiterhin ein übergehen des Prüfvorgangs zu verhindern, ist der Betätigungsschalter für den Testsender so mit der Anlaßvorrichtung für das Fahrzeug verbunden, daß er beim Anlaßvorgang kurzfristig eingeschaltet ist und sich damit zwangsläufig bei jedem Startvorgang eine Prüfung erreichen läßt.

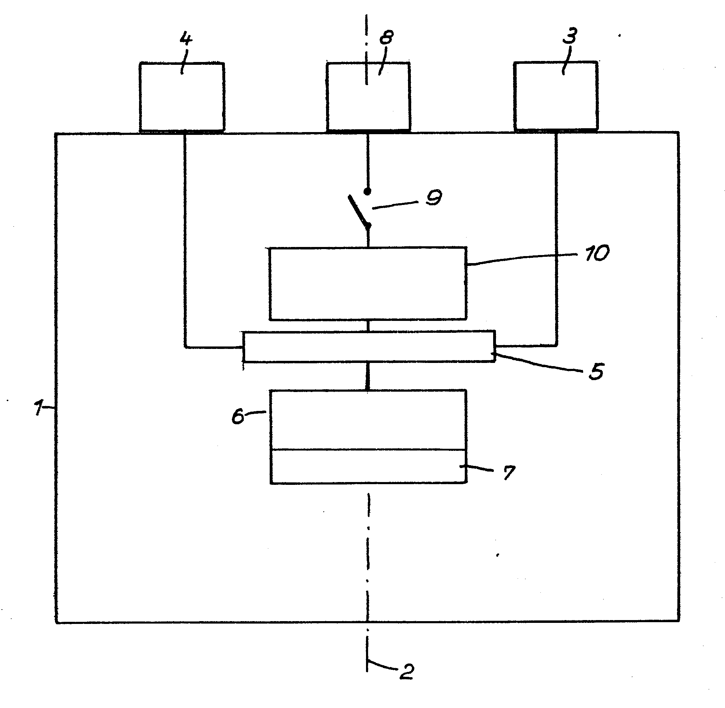

Die Zeichnung zeigt ein Ausführungsbeispiel der Erfindung, und zwar eine schematische Draufsicht auf ein selbstfahrendes Fahrzeug.

An der Vorderseite des Fahrzeugs 1 sind symmetrisch zur gestrichelt dargestellten Fahrzeuglängsachse 2 zwei Abtastelemente 3 und 4 angeordnet, die mit einer Steuerungseinrichtung 5 für die nicht dargestellte Lenkung verbunden sind. An die Steuerungseinrichtung 5 schließt sich eine Prüfvorrichtung 6 an, die ihrerseits wiederum auf eine Abschalt- und Blockiervorrichtung 7 einwirkt. In der Fahrzeuglängsachse 2, und zwar in einer Ebene mit den Abtastelementen 3 und 4, ist ein Sender 8 angeordnet, der die Impulse eines Leitdrahtes ausstrahlt, wenn der Schalter 9 geschlossen ist. Auf diesen Schalter 9 wirkt die Startvorrichtung 10 des Fahrzeugs so ein, daß der Schalter beim Startvorgang kurzfristig eingeschaltet ist. Während der

Einschaltzeit werden die vom Sender 8 ausgehenden Impulse von den Abtastelementen 3 und 4 aufgenommen und über die Lenkeinrichtung 5 der Prüfvorrichtung 6 zugeführt. Sofern diese Prüfvorrichtung einen Fehlwert feststellt, wird die Abschalt- und Blockiervorrichtung 7 wirksam, so daß das Fahrzeug 1 nicht benutzt werden kann.

- 1 -

14 568

A n s p r ü c h e

1. Vorrichtung zur Abtastung eines Leitdrahtes zur Führung von selbstfahrenden Fahrzeugen, mit mindestens einem Abtastelement, gekennzeichnet durch die Anordnung eines mittels eines Schalters (9) betätigbaren, die Impulse eines Leitdrahtes ausstrahlenden Testsenders (8) und einer dem Abtastelement (3,4) nachgeschalteten Prüfvorrichtung (6) für dieses.

2. Vorrichtung mit zwei seitlich der Fahrzeuglängsachse angeordneten Abtastelementen nach Anspruch 1, dadurch gekennzeichnet, daß der Testsender (8) etwa in der Fahrzeuglängsachse (2) angeordnet ist.

3. Vorrichtung nach einem der Ansprüche 1 oder 2, dadurch gekennzeichnet, daß der Betätigungsschalter (9) für den Testsender (8) so mit der Startvorrichtung (10) für das Fahrzeug (1) verbunden ist, daß er beim Anlaßvorgang kurzfristig eingeschaltet ist.

4.   Vorrichtung nach einem oder mehreren der vorhergehenden Ansprüche, dadurch gekennzeichnet, daß die Prüfvorrichtung (6) mit einer Abschalt- und/oder Blockiervorrichtung (7) für den Antriebsmotor des Fahrzeugs (1) so verbunden ist, daß bei Fehlermessung die Abschalt- und/oder Blockiervorrichtung wirksam ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-3 015 954 (BOSCH) <br> * Seite 5, Zeile 15 - Seite 6, Zeile 32; Abbildung * | 1,2,4 | G 05 D 1/03 |
| Y | US-A-3 516 715 (A. FIELEK) <br> * Spalte 3, Zeilen 61-74; Abbildung 1 * | 1,3 | |
| E,X | DE-A-3 034 659 (BOSCH) <br> * Seite 12, Zeilen 8-16; Abbildung 6 * | 1,2,4 | |

| | RECHERCHIERTE SACHGEBIETE (Int. Cl. 3) |
|---|---|
| | G 05 D <br> B 62 D |

Der vorliegende Recherchenbericht wurde für alle Patentansprüche erstellt.

| Recherchenort <br> DEN HAAG | Abschlußdatum der Recherche <br> 06-07-1983 | Prüfer <br> HELOT H.V. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82